(19) Europäisches Patentamt
European Patent Office
Office européen des brevets

(11) EP 3 411 434 B1

(12) FASCICULE DE BREVET EUROPEEN

(45) Date de publication et mention de la délivrance du brevet:
**25.11.2020 Bulletin 2020/48**

(21) Numéro de dépôt: **17702405.6**

(22) Date de dépôt: **03.02.2017**

(51) Int Cl.:
***C08L 5/16*** *(2006.01)* ***C08B 37/16*** *(2006.01)*
***C02F 1/70*** *(2006.01)* ***B01J 20/24*** *(2006.01)*
*C02F 101/20 (2006.01)* *C02F 101/30 (2006.01)*
*C02F 101/32 (2006.01)* *C02F 101/34 (2006.01)*
*C02F 101/36 (2006.01)*

(86) Numéro de dépôt international:
**PCT/EP2017/052434**

(87) Numéro de publication internationale:
**WO 2017/134250 (10.08.2017 Gazette 2017/32)**

# (54) UTILISATION D'UN POLYCONDENSAT DE CYCLODEXTRINE OU D'UNE COMPOSITION COMPRENANT UN TEL POLYCONDENSAT, COMME AGENT DE CAPTURE

VERWENDUNG EINES CYCLODEXTRINPOLYKONDENSATS ODER EINER ZUSAMMENSETZUNG MIT SOLCH EINEM POLYKONDENSAT ALS FÄNGER

USE OF A CYCLODEXTRIN POLYCONDENSATE OR A COMPOSITION COMPRISING SUCH A POLYCONDENSATE, AS A CAPTURING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.02.2016 FR 1650943**

(43) Date de publication de la demande:
**12.12.2018 Bulletin 2018/50**

(73) Titulaire: **BIOSTART**
**91058 Évry-Courcouronnes Cedex (FR)**

(72) Inventeurs:
- **DUVAL, Bertrand**
**78580 Maule (FR)**
- **GRENARD, Fabrice**
**75015 Paris (FR)**
- **LOISEAU, Jean-Baptiste**
**75019 Paris (FR)**
- **ROUGIER, Bernard**
**75013 Paris (FR)**

(74) Mandataire: **Brevalex**
**95, rue d'Amsterdam**
**75378 Paris Cedex 8 (FR)**

(56) Documents cités:
**WO-A1-2014/095426 WO-A1-2014/095427**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 411 434 B1

## Description

### DOMAINE TECHNIQUE

La présente invention se rapporte à un polycondensat de cyclodextrine(s) ainsi qu'à une composition comprenant au moins un tel polycondensat de cyclodextrine(s).

Cette invention trouve, en particulier, de multiples applications dans le domaine de la dépollution d'environnements de substances qui y sont contenues et qui sont plus ou moins nocives pour la santé humaine ou animale.

La présente invention se rapporte plus particulièrement aux utilisations de ce polycondensat de cyclodextrine(s) et de cette composition comprenant au moins un polycondensat de cyclodextrine(s), en tant qu'agent de capture de substances, telles que celles mentionnées ci-dessus.

### ÉTAT DE LA TECHNIQUE ANTÉRIEURE

À l'heure actuelle, de nombreuses recherches sont menées dans le but de dépolluer l'air, l'eau ou le sol, des substances qui y ont été introduites, de manière directe ou indirecte, par l'activité humaine, de telles substances étant susceptibles, entre autres, de porter atteinte à la santé humaine, à la santé animale ainsi qu'à la qualité des écosystèmes aquatiques, aériens et/ou terrestres, et d'engendrer une détérioration ou une entrave à l'agrément de l'environnement ou à d'autres utilisations légitimes de celui-ci.

Parmi les solutions proposées à ce jour, il est notamment proposé des matériaux permettant de piéger, dans leur matrice, une très large gamme de ces substances ou de mélanges de ces substances.

Ainsi, le document WO 2014-095427 A1, référencé **[1]** dans la suite de la présente description, se rapporte à l'utilisation d'un polycondensat de cyclodextrine comme agent de capture d'une substance ou d'un mélange de substances susceptibles de polluer l'environnement.

Parmi les substances susceptibles de polluer l'environnement visées par le document **[1]**, sont cités :

- les polluants gazeux (composés organiques volatils, également dénommés COV), parmi lesquels les composés chlorés tels que le chlorobenzène, le tétrachlorure de carbone et le monochlorure de vinyle,
- les cations métalliques, tels que les cations de plomb, de cadmium, de mercure, de fer et de cuivre,
- les huiles et graisses, d'origine minérale, animale, végétale, marine ou synthétique, parmi lesquelles les mélanges complexes d'hydrocarbures pétroliers, comme les carburants, lubrifiants et liquides de frein, les additifs ajoutés en petites quantités pour améliorer les propriétés techniques, par exemple les produits antidétonants, antioxydants, antigels, substituts du plomb et colorants,
- les substances polluantes contenues dans les eaux potables, les eaux industrielles et les effluents aqueux, telles que les polluants naturels malodorants de l'eau potable comme la (-) géosmine et le (+) 2-méthylisobornéol,
- les substances polluantes contenues dans les sols, telles que les chlorophénols (tri- et penta-chlorophénol) et les hydrocarbures aromatiques polycycliques (naphtalène, phénanthrène), et
- les molécules odorantes volatiles environnantes.

Le polycondensat de cyclodextrine décrit par le document **[1]** est obtenu par la réaction des composés (A) à (C) et, le cas échéant, (D), (E) et/ou (F) :

(A) d'au moins une cyclodextrine,
(B) d'au moins un acide polycarboxylique, linéaire, ramifié et/ou cyclique, saturé, insaturé ou aromatique et/ou au moins un ester, un anhydride ou un halogénure dudit acide polycarboxylique,
(C) d'au moins un polymère polyol thermoplastique,
(D) éventuellement d'au moins un catalyseur d'estérification,
(E) éventuellement d'au moins un anhydride cyclique d'acide polycarboxylique choisi pour être différent de l'anhydride d'acide polycarboxylique du paragraphe B), et/ou
(F) éventuellement d'au moins un polyol non polymérique comprenant de 3 à 6 groupes hydroxyles.

S'il est décrit comme pouvant être utilisé en tant qu'agent de capture de bon nombre de substances susceptibles de polluer divers environnements, le polycondensat de cyclodextrine décrit dans le document **[1]** n'est toutefois pas utilisé en tant qu'agent de capture de substances du type médicaments et/ou pesticides qui, pour certaines, sont particulièrement difficiles à piéger et à extraire des environnements dans lesquels elles sont présentes.

Les Inventeurs se sont donc fixé pour but de mettre au point un polycondensat de cyclodextrine(s) ainsi qu'une composition comprenant au moins un tel polycondensat de cyclodextrine(s) qui puissent être utilisés en tant qu'agent de capture permettant de capter un grand nombre de substances, parmi lesquelles les métaux à leur degré d'oxydation

0 ainsi que des substances du type médicaments et/ou pesticides.

## EXPOSÉ DE L'INVENTION

L'invention est décrite conformément aux revendications annexées. Le but précédemment énoncé ainsi que d'autres est atteint par l'utilisation d'un polycondensat de cyclodextrine(s) du type précité, ou d'une composition comprenant au moins un polycondensat de cyclodextrine(s) du type précité, c'est-à-dire obtenu par la réaction des composés (A) à (C) suivants :

(A) au moins une cyclodextrine,
(B) un acide polycarboxylique aliphatique saturé, linéaire ou ramifié et
(C) au moins un polymère polyol thermoplastique.

Selon l'invention, le polymère polyol thermoplastique (C) est un copolymère d'éthylène et d'alcool vinylique (EVOH) et le polycondensat de cyclodextrine(s) ainsi obtenu, ou une composition comprenant au moins ce polycondensat de cyclodextrine(s), est utilisé(e) en tant qu'agent de capture d'au moins une substance choisie parmi un élément métallique et une molécule organique présentant un coefficient de partage octanol/eau, noté Log Kow, supérieur ou égal à 2.

Dans ce qui précède et dans ce qui suit, on entend par :

- *"polycondensat",* tout polymère obtenu par polymérisation par étapes où chaque étape est une réaction de condensation, qui se fait avec élimination d'eau. Les monomères avec deux ou plusieurs groupements fonctionnels réagissent pour former d'abord des dimères, ensuite des trimères et oligomères plus longs, et ensuite des polymères à chaine longue, et
- *"agent de capture",* tout composé chimique, en particulier tout polymère, capable de piéger une substance ou un mélange de substances au sein de sa structure, de l'immobiliser et/ou de retarder sa libération vers l'extérieur. Le polycondensat de cyclodextrine(s) selon l'invention présente un réseau poreux qui combine des propriétés superabsorbantes de type éponge avec la capacité à former des complexes d'inclusion dans les cavités de la ou des cyclodextrines immobilisées au sein du réseau polymérique, permettant ainsi de capturer des substances ayant une affinité avec ledit réseau polymérique.

Les Inventeurs ont en effet constaté que, de manière surprenante et inattendue, ce polycondensat de cyclodextrine(s) particulier permet de capter, de manière performante, des substances qui ne sont pas décrites dans le document **[1],** en l'espèce des métaux ou éléments métalliques, notés M, à leur degré d'oxydation 0 ($M^0$), ainsi que des substances de type médicaments et pesticides, qui sont connues comme étant particulièrement difficiles à piéger et, par conséquent, à extraire en vue de la dépollution de l'environnement ou du milieu dans lequel elles sont contenues.

Le polycondensat de cyclodextrine(s) dont l'utilisation fait l'objet de la présente invention est obtenu par la réaction des composés (A) à (C) suivants :

(A) au moins une cyclodextrine,
(B) un acide polycarboxylique aliphatique saturé, linéaire ou ramifié, et
(C) un copolymère d'éthylène et d'alcool vinylique (EVOH).

La cyclodextrine (A) mise en œuvre dans le cadre de la présente invention est un composé de structure générale (I) ci-après, ou l'un de ses dérivés de ce composé comme les dérivés méthylés, hydroxyalkylés, sulfoalkylés, sulfatés ou encore, les cyclodextrines substituées par des sucres :

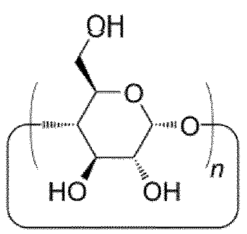

(I)

On pourra, en particulier, se reporter aux exemples de cyclodextrines et de dérivés de cyclodextrines qui sont décrits dans le document **[1],** de la page 15, ligne 23 à la page 16, ligne 5.

Dans une variante avantageuse de l'invention, la cyclodextrine (A) est choisie parmi l'a-cyclodextrine, la β-cyclodextrine et la γ-cyclodextrine.

Dans un premier mode de réalisation de l'invention, le polycondensat de cyclodextrine est obtenu par la réaction des composés (A) à (C) ne mettant en œuvre qu'une cyclodextrine (A).

Cette seule cyclodextrine (A) peut avantageusement être l'a-cyclodextrine, la β-cyclodextrine ou la γ-cyclodextrine.

Dans un deuxième mode de réalisation de l'invention, le polycondensat de cyclodextrines est obtenu par la réaction des composés (A) à (C) mettant en œuvre un mélange de cyclodextrines (A), par exemple un mélange de deux, trois, voire plus, cyclodextrines (A).

Dans une variante avantageuse de ce deuxième mode de réalisation de l'invention, ce mélange de cyclodextrines (A) comprend deux ou trois cyclodextrines choisies parmi l'a-cyclodextrine, la β-cyclodextrine et la γ-cyclodextrine.

Lorsque ce mélange de cyclodextrines (A) comprend deux cyclodextrines, l'une de ces deux cyclodextrines est avantageusement la β-cyclodextrine. Un tel mélange de cyclodextrines (A) peut notamment comprendre, par rapport à la masse totale dudit mélange, les proportions massiques suivantes :

- de 10 % à 60 % de β-cyclodextrine, et
- de 40 % à 90 % d'a-cyclodextrine ou de γ-cyclodextrine.

L'expression "*de... à*...", qui vient d'être utilisée pour définir des intervalles de proportions massiques et qui est utilisée dans la suite de la présente demande, doit être comprise comme définissant non seulement les valeurs comprises dans ces intervalles, mais également les valeurs des bornes de ces intervalles.

Dans ce mélange particulier de deux cyclodextrines (A), la proportion massique de β-cyclodextrine peut avantageusement aller de 20 % à 50 % et, préférentiellement, de 25 % à 40 %, par rapport à la masse totale dudit mélange de cyclodextrines.

Dans ce mélange particulier de deux cyclodextrines (A), la proportion massique d'a-cyclodextrine ou de γ-cyclodextrine peut avantageusement aller de 50 % à 80 % et, préférentiellement, de 60 % à 75 %, par rapport à la masse totale dudit mélange de cyclodextrines.

Dans une variante préférentielle de ce deuxième mode de réalisation de l'invention, ce mélange de cyclodextrines (A) est formé par le mélange de l'a-cyclodextrine, de la β-cyclodextrine et de la γ-cyclodextrine.

Dans cette variante préférentielle, le mélange de cyclodextrines (A) peut comprendre, par rapport à la masse totale dudit mélange, les proportions massiques suivantes :

- de 30 % à 70 % d'a-cyclodextrine,
- de 20 % à 40 % de β-cyclodextrine, et
- de 10 % à 30 % de γ-cyclodextrine.

Dans ce mélange particulier de cyclodextrines (A), la proportion massique d'a-cyclodextrine peut avantageusement aller de 40 % à 60 % et, préférentiellement, de 44 % à 56 %, par rapport à la masse totale dudit mélange de cyclodextrines.

Dans ce mélange particulier de cyclodextrines (A), la proportion massique de β-cyclodextrine peut avantageusement aller de 25 % à 35 % et, préférentiellement, de 27 % à 33 %, par rapport à la masse totale dudit mélange de cyclodextrines.

Dans ce mélange particulier de cyclodextrines (A), la proportion massique de γ-cyclodextrine peut avantageusement aller de 15 % à 25 % et, préférentiellement, de 17 % à 23 %, par rapport à la masse totale dudit mélange de cyclodextrines.

Le composé (B) mis en œuvre dans le cadre de la présente invention est un acide polycarboxylique aliphatique saturé, linéaire ou ramifié.

Ce ou ces acides polycarboxyliques aliphatiques, qui comprennent au moins deux groupes carboxyle -COOH, sont saturés et peuvent être linéaires ou ramifiés. Ce ou ces acides polycarboxyliques peuvent comprendre de 2 à 50, avantageusement de 3 à 36, préférentiellement de 4 à 18 et, plus préférentiellement encore, de 4 à 12 atomes de carbone.

On pourra se reporter aux paragraphes situés de la page 16, ligne 33 à la page 17, ligne 20 du document **[1]** pour des exemples d'acide(s) polycarboxylique(s). Le composé (B) est un acide polycarboxylique aliphatique saturé, linéaire ou ramifié.

Dans une variante préférée de l'invention, l'acide polycarboxylique (B) est choisi parmi l'acide malique, l'acide citrique, l'acide 1,2,3-propanetricarboxylique, l'acide 1,2,3,4-butanetétracarboxylique, l'acide oxydisuccinique et l'acide thiodisuccinique.

Dans une variante plus particulièrement préférée de l'invention, l'acide polycarboxylique (B) est l'acide citrique.

Le composé (C) mis en œuvre dans le cadre de la présente invention est un copolymère d'éthylène et d'alcool

vinylique, connu sous l'abréviation EVOH.

Dans une variante de l'invention, le polycondensat de cyclodextrine(s) dont l'utilisation fait l'objet de la présente invention est obtenu par la réaction qui met en œuvre, par rapport à la masse totale des composés (A) à (C), les proportions massiques suivantes des composés (A) à (C) :

- de 15 % à 60 % d'une ou plusieurs cyclodextrines (A),
- de 0,5 % à 12 % d'un ou plusieurs composés (B), et
- de 39,5 % à 84,5 % d'EVOH (C).

Dans cette variante de l'invention, la proportion massique de la ou des cyclodextrines (A) peut avantageusement aller de 20 % à 50 % et, préférentiellement, de 26 % à 44 %, par rapport à la masse totale des composés (A) à (C).

Dans cette variante de l'invention, la proportion massique du ou des composés (B) peut avantageusement aller de 1 % à 8 % et, préférentiellement, de 2 % à 6 %, par rapport à la masse totale des composés (A) à (C).

Dans cette variante de l'invention, la proportion massique d'EVOH (C) peut avantageusement aller de 49 % à 79 % et, préférentiellement, de 54 % à 72 %, par rapport à la masse totale des composés (A) à (C).

Dans une autre variante de l'invention, le polycondensat de cyclodextrine(s) peut être obtenu par la réaction mettant en œuvre, non seulement les composés (A), (B) et (C), mais également l'un au moins des composés choisis parmi les composés (D), (E) et (F) décrits dans le document **[1].**

Le polycondensat de cyclodextrine(s) mis en œuvre dans le cadre de la présente invention se présente sous la forme d'un composé solide qui peut avantageusement être transformé, par exemple sous la forme de galets, de granulés, d'une poudre ou de nanotubes. S'agissant d'un composé solide, le polycondensat de cyclodextrine(s) peut également être moulé.

L'invention se rapporte également à l'utilisation d'une composition comprenant au moins un polycondensat de cyclodextrine(s) tel que défini ci-dessus, étant précisé que les caractéristiques avantageuses et préférentielles décrites ci-dessus en relation avec le polycondensat de cyclodextrine(s) peuvent être prises seules ou en combinaison.

Ainsi, cette composition comprend au moins un polycondensat de cyclodextrine(s) obtenu par la réaction des composés (A) à (C) suivants :

(A) au moins une cyclodextrine,
(B) un acide polycarboxylique aliphatique saturé, linéaire ou ramifié et
(C) au moins un copolymère d'éthylène et d'alcool vinylique (EVOH).

Dans une variante avantageuse de l'invention, la composition peut, en outre, comprendre un ou plusieurs autres composés, ce ou ces autres composés pouvant conférer des propriétés complémentaires à celles du ou des polycondensats de cyclodextrine(s), par exemple des propriétés magnétiques.

De tels composés peuvent notamment être choisis parmi des oxydes métalliques (par exemple, du dioxyde de titane $TiO_2$), du charbon actif, des peintures, des composés magnétiques et des agents antibactériens (par exemple, des microparticules d'argent ou de cuivre).

Comme déjà indiqué ci-dessus, l'invention se rapporte à l'utilisation d'un polycondensat de cyclodextrine(s) tel que défini ci-dessus ainsi qu'à l'utilisation d'une composition telle que définie ci-dessus en tant qu'agent de capture.

Ainsi, ce polycondensat de cyclodextrine(s) seul, ou en mélange avec un ou plusieurs autres composés dans une composition, permet de piéger une substance ou un mélange de substances au sein de sa structure, de l'immobiliser et/ou de retarder sa libération vers l'extérieur.

En particulier, le polycondensat de cyclodextrine(s) et/ou la composition comprenant un ou plusieurs polycondensats de cyclodextrine(s) peuvent être utilisés comme agent de capture d'au moins une substance choisie parmi un élément métallique et une molécule organique.

Les Inventeurs ont constaté que l'utilisation de ce polycondensat de cyclodextrine(s) et/ou de cette composition permet de dépolluer un milieu d'un nombre important de substances, que ces substances soient présentes dans l'air, dans le sol ou dans l'eau comme, par exemple, dans des eaux usées, dans une eau de rivière, dans de l'eau potable ou dans de l'eau osmosée.

Lorsque la substance est un élément métallique, cet élément métallique $M^0$ peut notamment être choisi parmi l'aluminium, l'argent, le fer, le bore, l'étain, le cuivre, le zinc, le plomb, le nickel, le cadmium, le chrome, le mercure et l'or.

Lorsque la substance est une molécule organique, cette molécule organique présente un coefficient de partage octanol/eau, noté Log Kow ou LogP, supérieur ou égal à 2.

On rappelle que le coefficient de partage octanol/eau, ou Log Kow, d'un composé est une mesure de la solubilité différentielle de ce composé dans deux solvants, l'octanol et l'eau. Le Log Kow est déterminé par la formule suivante :

$$\text{Log } K_{ow} = \text{Log } (C_{oct}/C_{eau})$$

dans laquelle $C_{oct}$ représente la concentration molaire du composé dans l'octanol, et
$C_{eau}$ représente la concentration molaire du composé dans l'eau.

Dans une variante avantageuse de l'invention, le polycondensat de cyclodextrine(s) et la composition peuvent être utilisés comme agent de capture d'au moins une molécule organique présentant un Log Kow compris entre 4 et 10 et, préférentiellement, entre 5 et 8.

Dans une variante préférée de l'utilisation selon l'invention, la molécule organique est choisie parmi un herbicide tel que le diuron, un médicament, par exemple un médicament anticonvulsivant tel que la carbamazépine, un perturbateur endocrinien tel que les polychlorobiphényles (PCB ou pyralènes), les phtalates et les hydrocarbures aromatiques polycycliques (HAP) tels que le benzopyrène, ces molécules organiques étant connues pour être particulièrement difficiles à dépolluer des milieux les contenant.

En particulier, le polycondensat de cyclodextrine(s) selon l'invention est particulièrement efficace en tant qu'agent de capture des congénères des polychlorophényles connus sous les abréviations PCB 28, PCB 52, PCB 101, PCB 118, PCB 138, PCB 153 et PCB 180.

D'autres caractéristiques et avantages de l'invention apparaîtront à la lecture du complément de description qui suit, qui est fait en référence aux figures 1 et 2 annexées, et qui se rapporte à un exemple de préparation de quatre polycondensats de cyclodextrine(s) ainsi qu'à des exemples d'utilisation permettant d'illustrer les performances de ces quatre polycondensats de cyclodextrine(s) pour dépolluer des solutions aqueuses contenant initialement des éléments métalliques et différentes molécules organiques telles que des pesticides et médicaments.

Bien entendu, ces exemples ne sont donnés qu'à titre d'illustration de l'objet de l'invention et ne constituent, en aucun cas, une limitation de cet objet.

## BRÈVE DESCRIPTION DES DESSINS

La figure 1 est un histogramme illustrant les taux d'abattement, notés Ab et exprimés en %, traduisant les concentrations massiques résiduelles en Pb et en Ni par rapport à leurs concentrations massiques initiales dans chacune des solutions S1 à S3.

La figure 2 est un histogramme illustrant les taux d'abattement, notés Ab et exprimés en %, traduisant les concentrations massiques résiduelles en diuron, noté "diuron", et en carbamazépine, notée "carba", par rapport à leurs concentrations massiques initiales dans chacune des solutions S4 et S5.

## EXPOSÉ DÉTAILLÉ DE MODES DE RÉALISATION PARTICULIERS

EXEMPLE 1 : PRÉPARATION DE POLYCONDENSATS DE CYCLODEXTRINE(S)

Trois polycondensats de cyclodextrine, notés P1, P2 et P3, et un polycondensat de cyclodextrines, noté P4, ont été préparés à partir des proportions massiques des composés (A) à (C) telles que mentionnées dans le tableau 1 ci-dessous.

Tableau 1

| Composés | (A) | | | (B) | (C) |
|---|---|---|---|---|---|
| | $\alpha$-cyclodextrine (%) | $\beta$-cyclodextrine (%) | $\gamma$-cyclodextrine (%) | acide citrique (%) | EVOH (%) |
| P1 | 28,6 | - | - | 3,0 | 68,4 |
| P2 | - | 28,6 | - | 3,0 | 68,4 |
| P3 | - | - | 28,6 | 3,0 | 68,4 |
| P4 | 14,3 | 8,6 | 5,7 | 3,0 | 68,4 |

Chacun de ces polycondensats de cyclodextrine(s) P1 à P4 se présente sous la forme d'un bloc solide de couleur jaune.

EXEMPLE 2 : DÉPOLLUTION DE SOLUTIONS AQUEUSES CONTENANT DES ÉLÉMENTS MÉTALLIQUES

Le nickel Ni et le plomb Pb, au degré d'oxydation 0, sont des substances que l'on retrouve très couramment dans les eaux usées et dans les eaux potables.

Pour examiner l'efficacité, en tant qu'agent de capture, du polycondensat de cyclodextrine P2 préparé ci-dessus puis broyé sous la forme d'une poudre présentant une granulométrie moyenne de 1 mm, trois solutions aqueuses, notées S1 à S3, ont été préparées :

- la solution S1 contient 0,1 g/L de $Ni^0$ et 0,1 g/L de $Pb^0$ dans une eau usée,
- la solution S2 contient 0,1 g/L de $Ni^0$ et 0,1 g/L de $Pb^0$ dans une eau potable, et
- la solution S3 contient 0,5 g/L de $Ni^0$ et 0,5 g/L de $Pb^0$ dans une eau potable.

En se reportant à la figure 1, on observe que l'on obtient des abattements s'échelonnant entre 35 % et plus de 70% pour le plomb et entre 14 % et 63 % pour le nickel, les valeurs les plus élevées étant atteintes lorsque ces éléments métalliques sont contenus dans l'eau potable.

EXEMPLE 3 : DÉPOLLUTION DE SOLUTIONS AQUEUSES CONTENANT DES MOLÉCULES ORGANIQUES

Le diuron est un pesticide de formule brute $C_9H_{10}Cl_2N_2O$, de Log Kow de 2,68, que l'on détecte fréquemment dans des ressources en eau pouvant servir à la production d'eau destinée à la consommation humaine.

La carbamazépine est un médicament de formule brute $C_{15}H_{12}N_2O$, de Log Kow de 2,45, que l'on rencontre fréquemment dans des eaux usées, dans des eaux de rivière et dans certaines eaux potables.

Ces substances étant toutes deux considérées comme particulièrement nocives pour la faune et, de surcroît, n'étant pas traitées par les stations de traitement des eaux, il y a un intérêt majeur à en dépolluer les milieux qui les contiennent.

Pour examiner l'efficacité, en tant qu'agent de capture, du polycondensat de cyclodextrine P2 préparé ci-dessus puis broyé sous la forme d'une poudre présentant une granulométrie moyenne de 1 mm, deux solutions aqueuses, notées S4 et S5, ont été préparées :

- la solution S4 contient 0,1 g/L de diuron et 0,1 g/L de carbamazépine dans une eau usée, et
- la solution S5 contient 0,5 g/L de diuron et 0,5 g/L de carbamazépine dans une eau potable.

En se reportant à la figure 2, on observe que l'on obtient des abattements s'échelonnant entre 3 % 15 % pour le diuron et entre 2 % et 14 % pour la carbamazépine, les valeurs les plus élevées étant atteintes lorsque ces substances métalliques sont contenues en une concentration massique initiale de 0,5 g/L.

Même si les taux d'abattement du présent exemple sont plus faibles que ceux atteints dans l'exemple 2 ci-dessus, ils restent néanmoins intéressants au regard de la dangerosité de ces deux substances, diuron et carbamazépine.

EXEMPLE 4 : DÉPOLLUTION DE SOLUTIONS AQUEUSES CONTENANT DES MOLÉCULES ORGANIQUES

Dans cet exemple, les essais ont été conduits à partir de solutions aqueuses, notées S6 à S14, comprenant une eau prélevée en sortie de la station d'épuration de La Folie, à Poitiers (France) et séparée de ses éventuelles matières en suspension, par décantation.

Les polycondensats de cyclodextrine(s) P1 à P4 obtenus à l'exemple 1 ci-dessus ont été broyés sous la forme d'une poudre de granulométrie moyenne de 1 mm puis soumis à quatre lavages successifs à l'eau déminéralisée, à raison de 3,49650 g/L d'eau déminéralisée.

Le protocole opératoire suivi est le même pour l'ensemble des essais, qui ont été par ailleurs conduits à une température comprise entre 10 °C et 15° C.

Des solutions-mères des substances à étudier sont préparées dans des solvants organiques. Des aliquotes de chacune de ces solutions-mères sont ajoutées à 1,5 L de l'eau prélevée et décantée, notée E, afin d'atteindre des concentrations massiques de 5 $\mu$g/L d'eau E dans les solutions aqueuses S6 à S14 ainsi constituées.

0,5 mL de chacune de ces solutions aqueuses ont été introduits dans 3 séries de flacons en verre, notés F1, F2 et F3.

Dans chacun des flacons F1 à F3, ont été introduits 3,49650 g/L de polycondensat de cyclodextrine P1, P2 ou P3 et 4,789270 g/L du polycondensat de cyclodextrines P4.

Les flacons F1 sont brièvement agités tandis que les flacons F2 et F3 sont placés sous agitation par retournement à une vitesse de 10 tr/min, pendant 10 min pour les flacons F2 et pendant 60 min pour les flacons F3.

Au terme de ces agitations et après une décantation de 10 min, l'eau est récupérée pour analyse.

Les solutions S6 à S14 ainsi préparées sont précisées dans le tableau 2 ci-dessous.

Tableau 2

| Solutions aqueuses | Substances | Famille | Log Kow |
|---|---|---|---|
| S6 | PCB 28 | polychlorobiphényles | 5,62 |
| S7 | PCB 52 | polychlorobiphényles | 6,12 |
| S8 | PCB 101 | polychlorobiphényles | 6,8 |
| S9 | PCB 118 | polychlorobiphényles | 6,84 |
| S10 | PCB 138 | polychlorobiphényles | 7,25 |
| S11 | PCB 153 | polychlorobiphényles | 7,21 |
| S12 | PCB 180 | polychlorobiphényles | 7,7 |
| S13 | benzopyrène | hydrocarbures aromatiques polycycliques | 6,07 |
| S14 | di(2-éthylhexyl)-phtalate | phtalates | 7,6 |

Les essais ont été conduits avec chacun des polycondensats de cyclodextrine(s) P1 à P4. Les concentrations massiques résiduelles en substances mesurées dans les eaux résiduelles des flacons F1 à F3, ainsi que les taux d'abattement correspondants après 60 min d'agitation, sont reportés dans les tableaux 3 à 6 ci-après.

Tableau 3

| Composé | Solutions aqueuses | Concentration massique (µg/L) | | | Taux d'abattement à 60 min (%) |
|---|---|---|---|---|---|
| | | 0 min | 10 min | 60 min | |
| P1 | S6 | 2,8 | 1,3 | 1,1 | 60 |
| | S7 | 3,2 | 1,8 | 1,4 | 56 |
| | S8 | 3,3 | 2,9 | 2,5 | 24 |
| | S9 | 4,3 | 4,8 | 3,9 | 9 |
| | S13 | 5,0 | 5,7 | 4,5 | 10 |
| | S14 | 4,9 | 4,2 | 4,5 | 8 |

Tableau 4

| Composé | Solutions aqueuses | Concentration massique (µg/L) | | | Taux d'abattement à 60 min (%) |
|---|---|---|---|---|---|
| | | 0 min | 10 min | 60 min | |
| P2 | S6 | 2,6 | 1,9 | 1,2 | 54 |
| | S7 | 3,1 | 2,3 | 1,6 | 48 |
| | S8 | 3,6 | 2,8 | 2,2 | 39 |
| | S9 | 5 | 4,3 | 3,3 | 34 |
| | S10 | 4,9 | 4,7 | 3,9 | 20 |
| | S11 | 4,6 | 4,4 | 3,9 | 15 |
| | S13 | 5,2 | 4,3 | 2,1 | 60 |
| | S14 | 5,2 | 4,5 | 4,1 | 21 |

Tableau 5

| Composé | Solutions aqueuses | Concentration massique (μg/L) | | | Taux d'abattement à 60 min (%) |
|---|---|---|---|---|---|
| | | 0 min | 10 min | 60 min | |
| P3 | S6 | 2,9 | 1,9 | 1,3 | 55 |
| | S7 | 3,3 | 2,6 | 1,9 | 42 |
| | S8 | 3,5 | 2,8 | 2,4 | 31 |
| | S9 | 4,6 | 4,2 | 3,5 | 24 |
| | S11 | 4,3 | 4,2 | 4,0 | 7 |
| | S13 | 4,9 | 4,8 | 3,7 | 24 |
| | S14 | 4,4 | 4,6 | 4,1 | 7 |

Tableau 6

| Composé | Solutions aqueuses | Concentration massique (μg/L) | | | Taux d'abattement à 60 min (%) |
|---|---|---|---|---|---|
| | | 0 min | 10 min | 60 min | |
| P4 | S6 | 2,1 | 2,1 | 1,4 | 29 |
| | S7 | 2,6 | 2,7 | 2,0 | 23 |
| | S8 | 3,7 | 2,9 | 2,2 | 40 |
| | S9 | 5,7 | 3,8 | 3,1 | 46 |
| | S10 | 6,2 | 4,1 | 3,6 | 42 |
| | S11 | 5,6 | 3,9 | 3,5 | 38 |
| | S12 | 7,5 | 5,2 | 5,0 | 33 |
| | S13 | 5 | 3,9 | 2,7 | 46 |
| | S14 | 5,3 | 4,5 | 4,0 | 25 |

On observe de bons taux d'abattement des différentes substances présentes dans les solutions aqueuses S6 à S14.

On note, à tire d'exemples :

- que le polycondensat de cyclodextrine P1 est plus efficace sur les substances PCB 28 et PCB 52 (solutions aqueuses S6 et S7) que les autres polycondensats de cyclodextrine(s) P2, P3 et P4,
- que le polycondensat de cyclodextrine P2 est plus efficace sur les substances PCB 101 et PCB 118 (solutions aqueuses S8 et S9) que les autres polycondensats de cyclodextrine P1 et P3, et
- que le polycondensat de cyclodextrines P4 offre une efficacité très satisfaisante sur l'ensemble des substances.

On peut donc optimiser le choix du polycondensat de cyclodextrine(s) en fonction de la nature des substances dont les milieux doivent être dépollués.

**BIBLIOGRAPHIE**

**[1]** WO 2014/095427 A1

**Revendications**

1. Utilisation d'un polycondensat de cyclodextrine(s), ou d'une composition comprenant au moins un polycondensat de cyclodextrine(s), en tant qu'agent de capture d'au moins une substance choisie parmi un élément métallique au degré d'oxydation 0 et une molécule organique présentant un coefficient de partage octanol/eau, noté Log Kow, supérieur ou égal à 2, le polycondensat de cyclodextrine(s) étant obtenu par la réaction des composés (A) à (C) suivants :

    (A) au moins une cyclodextrine,
    (B) un acide polycarboxylique aliphatique saturé, linéaire ou ramifié, et
    (C) au moins un copolymère d'éthylène et d'alcool vinylique (EVOH).

2. Utilisation selon la revendication 1, dans laquelle le composé (B) est choisi parmi l'acide malique, l'acide citrique, l'acide 1,2,3-propanetricarboxylique, l'acide 1,2,3,4-butanetétracarboxylique, l'acide oxydisuccinique et l'acide thiodisuccinique.

3. Utilisation selon la revendication 1 ou 2, dans laquelle la cyclodextrine (A) est choisie parmi l'a-cyclodextrine, la β-cyclodextrine et la γ-cyclodextrine.

4. Utilisation selon l'une quelconque des revendications 1 à 3, dans laquelle la réaction ne met en œuvre qu'une cyclodextrine (A).

5. Utilisation selon l'une quelconque des revendications 1 à 3, dans laquelle la réaction met en œuvre un mélange de cyclodextrines (A).

6. Utilisation selon la revendication 5, dans laquelle le mélange comprend, par rapport à la masse totale dudit mélange, les proportions massiques suivantes :

    - de 10 % à 60 %, avantageusement de 20 % à 50 % et, préférentiellement, de 25 % à 40 % de β-cyclodextrine, et
    - de 40 % à 90 %, avantageusement de 50 % à 80 % et, préférentiellement, de 60 % à 75 % d'a-cyclodextrine ou de γ-cyclodextrine.

7. Utilisation selon la revendication 5, dans laquelle le mélange comprend, par rapport à la masse totale dudit mélange, les proportions massiques suivantes :

    - de 30 % à 70 %, avantageusement de 40 % à 60 % et, préférentiellement, de 44 % à 56 % d'α-cyclodextrine,
    - de 20 % à 40 %, avantageusement de 25 % à 35 % et, préférentiellement, de 27 % à 33 % de β-cyclodextrine, et
    - de 10 % à 30 %, avantageusement de 15 % à 25 % et, préférentiellement, de 17 % à 23 % de γ-cyclodextrine.

8. Utilisation selon l'une quelconque des revendications 1 à 7, dans laquelle le composé (B) est l'acide citrique.

9. Utilisation selon l'une quelconque des revendications 1 à 8, dans laquelle la réaction met en œuvre, par rapport à la masse totale des composés (A) à (C), les proportions massiques suivantes :

    - de 15 % à 60 %, avantageusement de 20 % à 50 % et, préférentiellement, de 26 % à 44 % d'une ou plusieurs cyclodextrines (A),
    - de 0,5 % à 12 %, avantageusement de 1 % à 8 % et, préférentiellement, de 2 % à 6 % d'un ou plusieurs composés (B), et
    - de 39,5 % à 84,5 %, avantageusement de 49 % à 79 % et, préférentiellement, de 54 % à 72 % d'EVOH (C),

10. Utilisation selon l'une quelconque des revendications 1 à 9, dans laquelle la composition comprend, en outre, au moins un composé choisi parmi des oxydes métalliques, du charbon actif, des peintures, des composés magnétiques et des agents antibactériens.

11. Utilisation selon l'une quelconque des revendications 1 à 10, dans laquelle la molécule organique présente un Log Kow compris entre 4 et 10 et, préférentiellement, entre 5 et 8.

12. Utilisation selon l'une quelconque des revendications 1 à 11, dans laquelle la molécule organique est choisie parmi

le diuron, la carbamazépine, les polychlorobiphényles, les phtalates et le benzopyrène.

**13.** Utilisation selon l'une quelconque des revendications 1 à 10, dans laquelle l'élément métallique au degré d'oxydation 0 est choisi parmi l'aluminium, l'argent, le fer, le bore, l'étain, le cuivre, le zinc, le plomb, le nickel, le cadmium, le chrome, le mercure et l'or.

**14.** Utilisation selon l'une quelconque des revendications 1 à 13, dans laquelle la substance est présente dans l'air, dans le sol ou dans l'eau, par exemple dans des eaux usées, dans une eau de rivière, dans de l'eau potable ou dans de l'eau osmosée.

**Patentansprüche**

**1.** Verwendung eines Polykondensats von Cyclodextrin(en), oder einer Verbindung, die wenigstens ein Polykondensat von Cyclodextrin(en) enthält, als Mittel zum Fangen wenigstens einer Substanz, ausgewählt aus einem metallischen Element mit dem Oxidationsgrad 0 und einem organischen Molekül, das einen Octanol/Wasser-Verteilungskoeffizient, genannt Log Kow, größer oder gleich 2 aufweist, wobei das Polykondensat von Cyclodextrin(en) durch die Reaktion der folgenden Verbindungen (A) bis (C) erhalten wird:

(A) wenigstens ein Cyclodextrin,
(B) eine gesättigte, lineare oder verzweigte aliphatische Polycarbonsäure, und
(C) wenigstens ein Copolymer von Ethylen und Vinylalkohol (EVOH).

**2.** Verwendung nach Anspruch 1, bei der die Verbindung (B) ausgewählt ist aus Maleinsäure, Zitronensäure, 1,2,3-Propantricarbonsäure, 1,2,3,4-Butantetracarbonsäure, Oxidibernsteinsäure und Thiodibernsteinsäure.

**3.** Verwendung nach Anspruch 1 oder 2, bei der das Cyclodextrin (A) ausgewählt ist aus $\alpha$-Cyclodextrin, $\beta$-Cyclodextrin und $\gamma$-Cyclodextrin.

**4.** Verwendung nach einem der Ansprüche1 bis 3, bei der die Reaktion nur ein Cyclodextrin (A) verwendet.

**5.** Verwendung nach einem der Ansprüche 1 bis 3, bei der die Reaktion eine Mischung von Cyclodextrinen (A) verwendet.

**6.** Verwendung nach Anspruch 5, bei der die Mischung bezogen auf die Gesamtmasse der Mischung folgende Massenverhältnisse umfasst:

- von 10% bis 60%, vorzugsweise von 20% bis 50%, und weiter bevorzugt von 25% bis 40% $\beta$-Cyclodextrin, und
- von 40% bis 90%, vorzugsweise von 50% bis 80%, und weiter bevorzugt von 60% bis 75% $\alpha$-Cyclodextrin oder $\gamma$-Cyclodextrin.

**7.** Verwendung nach Anspruch 5, bei der die Mischung bezogen auf die Gesamtmasse der Mischung die folgenden Massenverhältnisse umfasst:

- von 30% bis 70%, vorzugsweise von 40% bis 60%, und weiter bevorzugt von 44% bis 56% $\alpha$-Cyclodextrin,
- von 20% bis 40%, vorzugsweise von 25% bis 35%, und weiter bevorzugt von 27% bis 33% $\beta$-Cyclodextrin, und
- von 10% bis 30%, vorzugsweise von 15% bis 25%, und weiter bevrozugt von 17% bis 23% $\gamma$-Cyclodextrin.

**8.** Verwendung nach einem der Ansprüche 1 bis 7, bei der die Verbindung (B) Zitronensäure ist.

**9.** Verwendung nach einem der Ansprüche 1 bis 8, bei der die Reaktion bezogen auf die Gesamtmasse der Verbindungen (A) bis (C) die folgenden Massenverhältnisse verwendet:

- von 15% bis 60%, vorzugsweise von 20% bis 50%, und weiter bevorzugt von 26% bis 44% ein oder mehrere Cyclodextrine (A),
- von 0,5% bis 12%, vorzugsweise von 1% bis 8%, und weiter bevorzugt von 2% bis 6% eine oder mehrere Verbindungen (B), und
- von 39,5% bis 84,5%, vorzugsweise von 49% bis 79%, und weiter bevorzugt von 54% bis 72% EVOH (C).

**10.** Verwendung nach einem der Ansprüche 1 bis 9, bei der die Verbindung ferner wenigstens eine Verbindung umfasst, ausgewählt aus den Metalloxiden, Aktivkohle, Farben, magnetische Verbindungen und antibakterielle Mittel.

**11.** Verwendung nach einem der Ansprüche 1 bis 10, bei der das organische Molekül einen Log Kow aufweist, der zwischen 4 und 10 enthalten ist, und vorzugsweise zwischen 5 und 8.

**12.** Verwendung nach einem der Ansprüche 1 bis 11, bei der das organische Molekül ausgewählt ist aus Diuron, Carbamazepin, den Polychlorbiphenylen, den Phtalaten und Benzopyren.

**13.** Verwendung nach einem der Ansprüche 1 bis 10, bei der das metallische Element mit dem Oxidationsgrad 0 ausgewählt ist aus Aluminium, Silber, Eisen, Bor, Zinn, Kupfer, Zink, Blei, Nickel, Cadmium, Chrom, Quecksilber und Gold.

**14.** Verwendung nach einem der Ansprüche 1 bis 13, bei der die Substanz in der Luft, im Boden oder im Wasser vorhanden ist, beispielsweise in Abwässern, in einem Flusswasser, in Trinkwasser oder in Osmosewasser.

## Claims

**1.** Use of a cyclodextrin(s) polycondensate, or of a composition comprising at least one cyclodextrin(s) polycondensate, as an agent for capturing at least one substance chosen from a metal element at the degree of oxidation 0 and an organic molecule having an octanol/water partition coefficient, referred to as Log Kow, greater than or equal to 2, the cyclodextrin(s) polycondensate being obtained by reacting the following compounds (A) to (C):

(A) at least one cyclodextrin,
(B) a saturated aliphatic polycarboxylic acid that is linear or branched, and
(C) at least one ethylene vinyl alcohol copolymer (EVOH).

**2.** Use according to claim 1, wherein the compound (B) is chosen from malic acid, citric acid, 1,2,3-propanetricarboxylic acid, 1,2,3,4-butanetetracarboxylic acid, oxydisuccinic acid and thiodisuccinic acid.

**3.** Use according to claim 1 or 2, wherein the cyclodextrin (A) is chosen from α-cyclodextrin, β-cyclodextrin and γ-cyclodextrin.

**4.** Use according to any of claims 1 to 3, wherein the reaction implements only one cyclodextrin (A).

**5.** Use according to any of claims 1 to 3, wherein the reaction implements a mixture of cyclodextrins (A).

**6.** Use according to claim 5, wherein the mixture comprises, based on the total weight of said mixture, the following mass proportions:

- from 10% to 60%, advantageously from 20% to 50% and, preferably, from 25% to 40% of β-cyclodextrin, and
- from 40% to 90%, advantageously from 50% to 80% and, preferably, from 60% to 75% of α-cyclodextrin or of γ-cyclodextrin.

**7.** Use according to claim 5, wherein the mixture comprises, based on the total weight of said mixture, the following mass proportions:

- from 30% to 70%, advantageously from 40% to 60% and, preferably, from 44% to 56% of α-cyclodextrin,
- from 20% to 40%, advantageously from 25% to 35% and, preferably, from 27% to 33% of β-cyclodextrin, and
- from 10% to 30%, advantageously from 15% to 25% and, preferably, from 17% to 23% of γ-cyclodextrin.

**8.** Use according to any of claims 1 to 7, wherein the compound (B) is citric acid.

**9.** Use according to any of claims 1 to 8, wherein the reaction implements, based on the total weight of the compounds (A) to (C), the following mass proportions:

- from 15% to 60%, advantageously from 20% to 50% and, preferably, from 26% to 44% of one or several

cyclodextrins (A),
- from 0,5% to 12%, advantageously from 1% to 8% and, preferably, from 2% to 6% of one or several compounds (B), and
- from 39,5% to 84,5%, advantageously from 49% to 79% and, preferably, from 54% to 72% of EVOH (C),

**10.** Use according to any of claims 1 to 9, wherein the composition further comprises at least one compound chosen from metal oxides, activated carbon, paints, magnetic compounds and antibacterial agents.

**11.** Use according to any of claims 1 to 10, wherein the organic molecule has a Log Kow between 4 and 10 and, preferably, between 5 and 8.

**12.** Use according to any of claims 1 to 11, wherein the organic molecule is chosen from diuron, carbamazepine, polychlorinated biphenyls, phthalates and benzopyrene.

**13.** Use according to any of claims 1 to 10, wherein the metal element at the degree of oxidation 0 is chosen from aluminium, silver, iron, boron, tin, copper, zinc, lead, nickel, cadmium, chromium, mercury and gold.

**14.** Use according to any of claims 1 to 13, wherein the substance is present in the air, in the ground or in water, for example in waste water, in river water, in drinking water or in osmotic water.

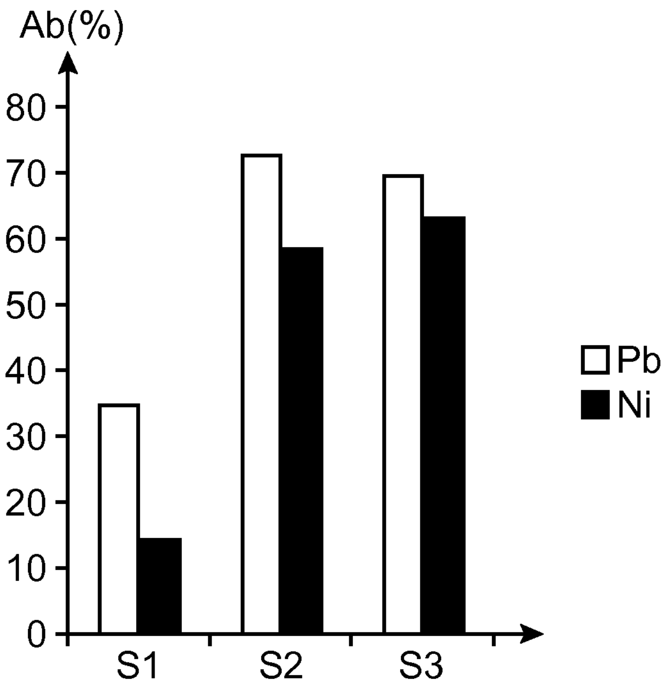
Ab(%)
80
70
60
50
40
30
20
10
0
S1
S2
S3
Pb
Ni

FIG.1

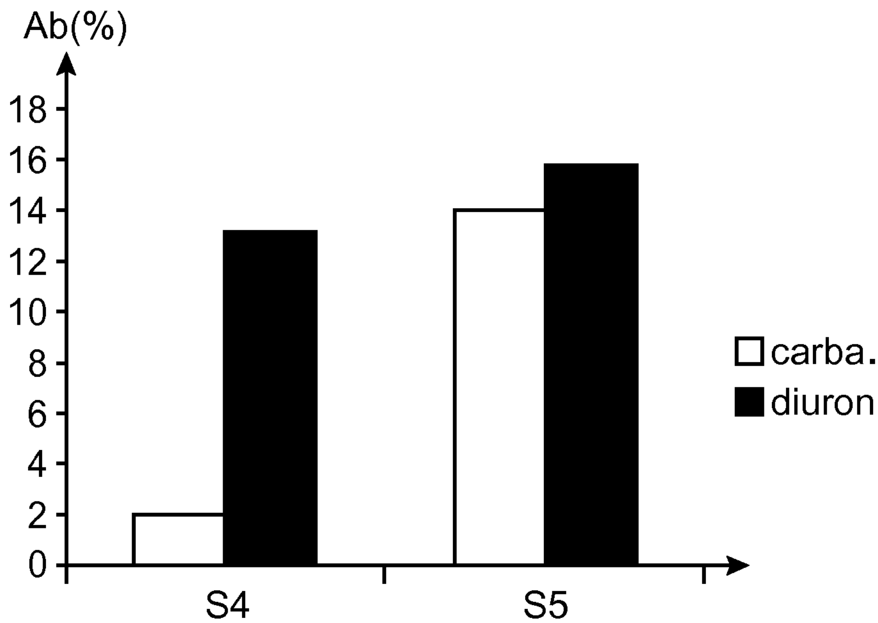
Ab(%)
18
16
14
12
10
8
6
4
2
0
S4
S5
carba.
diuron

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014095427 A1